# EUROPEAN PATENT SPECIFICATION

(11) **EP 1 950 448 B1**
(45) Date of publication and mention of the grant of the patent: **24.02.2010**
(21) Application number: 06832511.7
(22) Date of filing: 10.11.2006
(51) Int. Cl.: F16D 65/54

(54) **CLEARANCE ADJUSTMENT DEVICE FOR BRAKE CYLINDER, AND BRAKE CYLINDER WITH THE SAME**
NACHSTELLEINRICHTUNG FÜR BREMSZYLINDER UND BREMSZYLINDER DAMIT
DISPOSITIF DE REGLAGE D ESPACE LIBRE POUR CYLINDRE DE ROUE, ET CYLINDRE DE ROUE ASSOCIE

(30) Priority: 11.11.2005 JP 2005327123
(43) Date of publication of application: 30.07.2008
(73) Proprietor: Nabtesco Corporation, Tokyo 105-0022 (JP)
(72) Inventor: ASANO, Yoshio, Kobe-shi, Hyogo 651-2271 (JP)
(74) Representative: Intes, Didier Gérard André
(86) International application number: PCT/JP2006/322465
(87) International publication number: WO 2007/055319

(56) References cited:
- EP-A- 0 374 268
- DE-A1- 1 505 269
- JP-A- 07 305 729
- JP-A- 2004 142 925
- JP-B- 51 006 820
- JP-U- 57 136 053
- US-A- 2 568 858

## Description

### TECHNICAL FIELD

The present invention relates to a clearance adjustment device and a brake cylinder with the same, the clearance adjustment device keeping a clearance of a vehicle braking device at brake release constant in a brake cylinder including a push rod for operating the vehicle braking device.

### BACKGROUND ART

Regarding such a type of clearance adjustment devices, Patent Document 1 discloses a cylinder that includes an output piston provided with a push rod connected to a brake shoe for braking a wheel tread, and a friction ring assembly in which one elastic ring is placed between two discs to be expanded outward in a radius direction and friction slide resistance between the expanded ring and an inner surface of the cylinder is increased. In addition, Patent Document 1 discloses that the output piston and the friction ring assembly move in accordance with the wear amount when the brake shoe wears down during operation of a brake, the friction ring assembly does not move, at loosening of the brake, due to large slide resistance, and consequently a proper clearance between the brake shoe and the wheel tread can be secured.

In addition, Patent Document 1 discloses that the two discs are connected to each other, and when a desired slide resistance cannot be obtained due to wearing of an outer circumference of the elastic ring, the slide resistance can be adjusted by tightening an adjusting screw.
Patent Document 1: Japanese Published Examined Patent Application No. H06-67725 (Claim 1, Fig. 2) a family member of US-A-4 790 415.

### DISCLOSURE OF THE INVENTION

### Problems to be Solved by the Invention

However, in the constitution disclosed in Patent Document 1, since slide resistance is generated only by frictional force between a flat cylinder inner circumferential surface and an elastic ring surface, it easily becomes unstable by the surface condition and wearing down of the cylinder inner circumferential surface, wearing down of the elastic ring surface, and the like. In addition, adjustment with the adjusting screw makes adjustment and control of the slide resistance complicated, and, also in this point, the constitution should be improved.

### Means for Solving the Problem, and Effect of the Same

In view of the above problem, the present invention aims at easily adjusting and controlling slide resistance with a simple constitution, and next, means for solving the problems and an effect of the means will be described.

The closest prior art is known from US-A-2 568 858.
The present invention provides a clearance adjustment device for a brake cylinder constituted as follows. That is, the clearance adjustment device includes a push rod and a guide member which is attached to the push rod and movable together with the push rod. An uneven surface is provided in an outer surface of the push rod, the uneven surface having recesses and projections alternately arranged in a moving direction of the push rod. At least, a space for opening the uneven surface side of the guide member is formed in the member, and an elastic member is arranged in the space. The elastic member is deformed to be engaged with the uneven surface, and thus the guide member and the push rod are connected to each other. When force over a predetermined value is applied to the guide member, the elastic member is deformed to get over the projections of the uneven surface, and thus the push rod is displaced in relation to the guide member.

Since the elastic member is thus deformed and engaged (bitten), frictional force or connection force between the push rod and the guide member can be stabilized.

In the clearance adjustment device for a brake cylinder, it is preferable that the elastic member is an 0-ring.

Compared with an elastic member having a rectangular cross section, the O-ring having a circular cross section is easily engaged with (bitten into) the recess, and thus the frictional force or connection force can be stabilized.

In the clearance adjustment device for a brake cylinder, it is preferable to provide a plurality of 0-rings for being engaged with the uneven surface.

Thus, compared with the case where an O-ring is singly provided, the frictional force or connection force between the push rod and the guide member can be further stabilized.

In the clearance adjustment device for a brake cylinder, it is preferable to provide a backup ring between each of the plurality of O-rings.

Thus, the O-ring is prevented from entering the inside of the adjacent 0-ring or getting over the outside of the adjacent O-ring, and the push rod and the guide member can be securely connected to each other by the frictional force.

In the clearance adjustment device for a brake cylinder, it is preferable to provide, in the space, an energizing spring for pushing the 0-rings to one side in an axis direction.

Thus, since the O-rings are securely deformed by the energizing spring so as to be crushed in the axis direction even if a slight error arises in the size or the like of the space housing the O-rings, the frictional force or connection force between the push rod and the guide member can be stabilized.

In view of another point, the present invention provides a brake cylinder with the clearance adjustment device.

Thus, a compact brake cylinder can be obtained which has a clearance adjusting function of easily adjusting and controlling the slide resistance.

### BRIEF DESCRIPTION OF THE DRAWINGS

Fig. 1 is an entire cross sectional view of a brake cylinder with a clearance adjustment device of a first embodiment, the brake cylinder in a brake non-operating state;
Fig. 2 is an enlarged cross sectional view of O-rings arranged on a guide member;
Fig. 3 is an entire cross sectional view of the brake non-operating state after clearance adjustment;
Fig. 4 is a cross sectional view of a brake cylinder with a clearance adjustment device of a second embodiment, the brake cylinder in a brake non-operating state; and
Fig. 5 is an entire cross sectional view of the brake cylinder in the brake non-operating state after clearance adjustment.

### REFERENCE NUMERALS

1, 101: Brake cylinder
8: Push rod
12: Uneven surface
22: Guide member
24: Clearance adjustment device
27: 0-ring housing space
29: Backup ring
31: Energizing spring

### BEST MODE FOR CARRYING OUT THE INVENTION

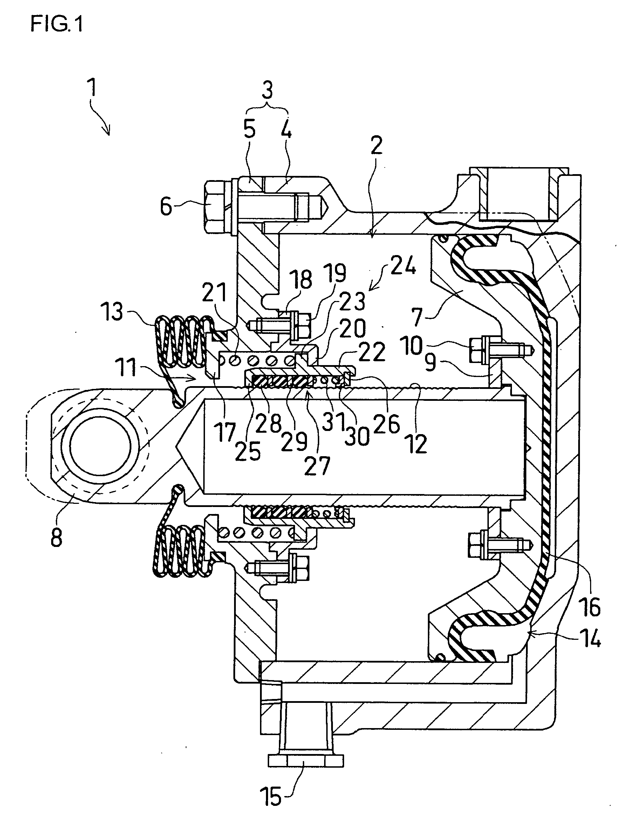

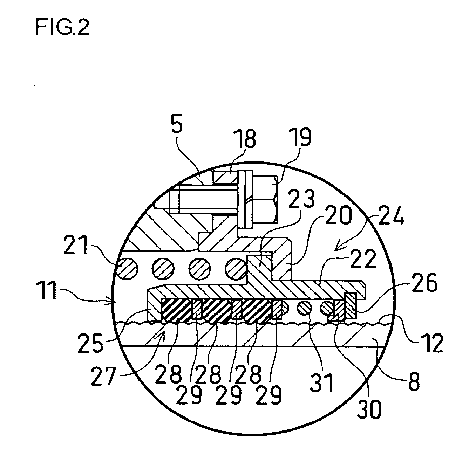

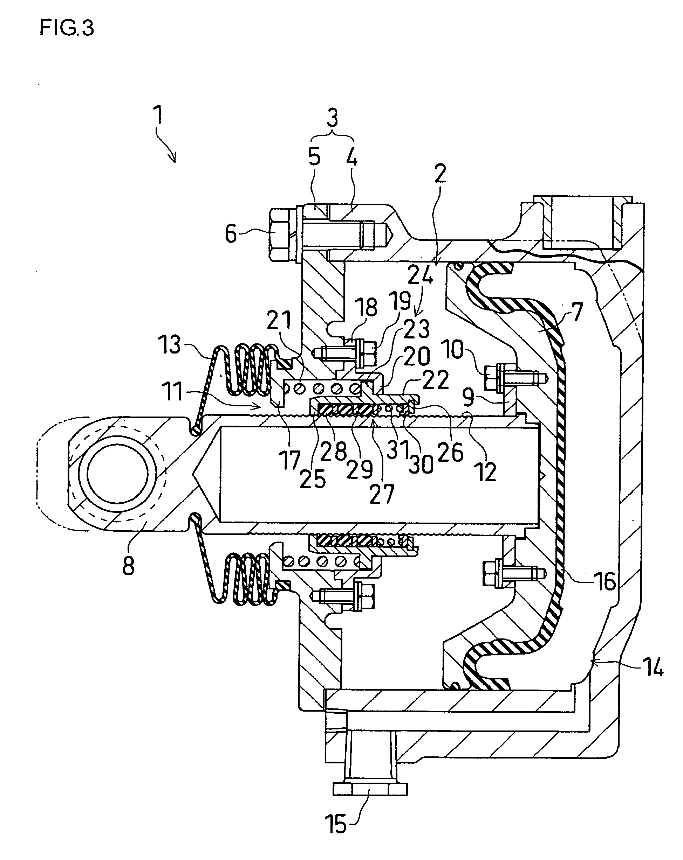

First, a brake cylinder with a clearance adjustment device of a first embodiment will be described with reference to Fig. 1. Fig. 1 is an entire cross sectional view of the brake cylinder of the first embodiment in a brake non-operating state. Fig. 2 is an enlarged cross sectional view of O-rings arranged on a guide member. Fig. 3 is an entire cross sectional view of the brake non-operating state after clearance adjustment. In the embodiment, the O-ring is cited as an elastic member, the 0-ring being available, and having a relatively high dimensional precision and a substantially circular cross section having a diameter of approximately 5 mm. However, such an elastic member is applicable that has an elliptical or rectangular cross section and is mainly made of rubber and the like.

As shown in Fig. 1, a brake cylinder 1 includes a main body 3 forming an inner space 2. The main body 3 includes a casing 4 and a cover 5 as main components.

The casing 4 is in a substantial cup shape with a bottom (cylindrical shape), and the cover 5 is fixed with a bolt 6 so that the opening side of the casing 4 is closed. Thus, the inner space 2 is formed. In addition, a piston 7 is arranged so as to partition the inner space into two parts, airtightly engaged with an inner circumferential surface of the casing 4, and slidable in an axis direction.

A base end of a push rod 8 is fixed to the piston 7 via a flange plate 9 and a bolt 10. The push rod 8 is inserted into an insertion hole 11 formed in the cover 5 to project outside of the main body 3, and a brake block of a vehicle braking device (not shown) is connected to a top end of the push rod 8.

An uneven surface 12 is formed in an outer circumferential surface of the push rod 8, the surface 12 having recesses and projections alternately arranged in an axis direction of the push rod 8 (moving direction of the push rod 8). A height difference between the recess and projection of the uneven surface 12 is approximately 0.3 mm. In addition, a dust-proof flexible bellows cover 13 is provided between the cover 5 and the push rod 8 so as to cover an opening of the insertion hole 11.

On one side of the spaces, into which the inner space 2 is partitioned by the piston 7, is formed a pressurizing chamber 14, and the pressurizing chamber 14 communicates with a feed/discharge port 15 for pressurized air (pressurized fluid), which is formed in the cover 3 (casing 4). A cup packing 16 is attached to the piston 7 so that the airtightness of the pressurizing chamber 14 is raised.

A ring-shaped spring receiving projection 17 is projected toward an axial center at one end of the axis direction of the insertion hole 11 formed in the cover 5. On the other hand, a cover 18 is fixed to the inner surface side of the cover 5 via a bolt 19, and on the bolt 19, a ring-shaped regulating projection 20 is projected toward the axial center. A coil spring-shaped returning spring 21 and a flange 23 of a guide member 22 described below are arranged between the spring receiving projection 17 and the regulating projection 20.

The guide member 22 is a main component of a clearance adjustment device 24 of the embodiment and has a substantially cylindrical shape, and the push rod 8 is inserted in a shaft hole thereof. A ring-shaped receiving projection 25 is projected from an inner circumferential surface of one end of the guide member 22 in the axis direction, and a locking ring 26 is engaged with an inner circumferential surface of the other end thereof in the axis direction. Thus, an O-ring housing space 27 is formed between the receiving projection 25 and the locking ring 26 on the inner circumferential side of the guide member 22. The 0-ring housing space 27 is in a shape for opening the uneven surface 12 side of the push rod 8 which the space 27 faces.

The guide member 22 is arranged so as to extend over the inner space 2 of the main body 3 and the inside of the insertion hole 11, and movable in the axis direction of the push rod 8. The ring-shaped flange 23 is projected on the outer side of the guide member 22, the returning spring 21 is interposed between the flange 23 and the spring receiving projection 17, and the guide member 22 is constantly energized to the base end side of the push rod 8.

The regulating projection 20 prevents the guide member 22, which is pushed in a base end direction of the push rod 8 by the returning spring 21, from over-advancing to the base end from a predetermined position. In addition, when the guide member 22 moves by a predetermined distance with advancing of the push rod 8, the spring receiving projection 17 comes into contact with the guide member 22 and serves as a locking projection for regulating over-movement of the guide member 22.

Fig. 2 is an enlarged view of a main part of the 0-ring housing space 27. As shown in Fig. 2, a plurality of (three) O-rings 28 as elastic members and a plurality of (three) backup rings 29 are alternately arranged inside the O-ring housing space 27. Each backup ring 29 is interposed between the adjacent O-rings 28. In addition, an energizing spring 31 is arranged between the backup ring 29 positioned at the end and a spring receiving ring 30 arranged on the locking ring 26 side, the energizing spring 31 for pushing the 0-rings 28 and the backup rings 29 against the receiving projection 25 side (to the advance side of the push rod 8). By the elastic force of the energizing spring 31, each O-ring 28 is elastically deformed so as to be crushed in the axis direction, the inner circumferential side thereof is expanded, and the O-ring is bitten into and engaged with the recess of the uneven surface 12 of the push rod 8. Thus, the guide member 22 and the push rod 8 are connected to each other to integrally move.

Based on the above constitution, in Fig. 1, the feed/discharge port 15 is in a state, where no pressurized air is fed, the piston 7 is positioned at a stroke end, and the push rod 8 is in a retreating state (non-operation position). In addition, the guide member 22 is fixed to the outer circumferential surface of the push rod 8 via the O-rings 28, and the flange 23 thereof is brought into contact with the regulating projection 20 by the returning spring 21.

When pressurized air is fed to the feed/discharge port 15 in this state, the piston 7 moves leftward in Fig. 1, and the push rod 8 moves leftward as shown by a chain line and pushes an inputting part of the vehicle braking device (not shown) to operate a brake. Since the returning spring 21 pushes the flange 23 of the guide member 22 when the pressurized air is discharged from the feed/discharge 15, the push rod 8, with which the guide member 22 is engaged, returns rightward in Fig. 1 and a brake operation state is returned to a brake release state shown in Fig. 1.

On the other hand, if the brake block of the vehicle braking device (not shown) wears down with long time use, a stroke of the push rod 8 necessary for operating the brake is slowly increased. When the push rod 8 advances at a large stroke and the guide member 22 comes into contact with the spring receiving projection 17, the spring receiving projection 17 applies a large returning force to the guide member 22. Consequently, the O-rings 28 are deformed to get over the projections of the uneven surface 12, and the push rod 8 is shifted (displaced) in relation to the guide member 22 in accordance with the remaining advancing strokes of the push rod 8. Since the wear amount of the brake block for each brake operation is extremely small, the displacement amount of the push rod for each brake operation is also generally as small as an interval between the projections of the uneven surface 12.

Accordingly, when the brake is then released, the return distance of the push rod 8 and the piston 7 is reduced (the clearance distance on the vehicle braking device side is reduced) by the displacement amount, and th.us the vehicle braking device can be operated at a constant stroke of the push rod 8 from the next time. Fig. 3 shows an example of a brake non-operation position in a state where the vehicle braking device wears down by a considerable amount and the clearance distance is adjusted by the clearance adjustment device 24. Compared with the non-operation position shown in Fig. 1, it is revealed that the push rod 8 and the piston 7 move to the advancing side by a considerable distance.

As described above, the clearance adjustment device 24 of the brake cylinder 1 of the embodiment includes the push rod 8 and the guide member 22 which is attached to the push rod 8 and movable together with the push rod 8. The uneven surface 12 is provided in the outer circumferential surface of the push rod 8, and the uneven surface 12 has recesses and projections alternately arranged in the moving direction of the push rod 8. In addition, the O-ring housing space 27 for opening the uneven surface 12 side is formed in the member 22, the O-rings 28 are arranged in the O-ring housing space 27, and the guide member 22 and the push rod 8 are connected to each other by engagement of the 0-rings 28 with the uneven surface 12. When the clearance distance of the braking device becomes large, the guide member 22 comes into contact with the projection 17 and a large retuning force is applied to the guide member 22 from the projection 17, the O-rings 28 are deformed to get over the projections of the uneven surface 12, and thus the push rod 8 is displaced in relation to the guide member 22.

Accordingly, the inner circumferential surfaces of the 0-rings 28 are deformed and engaged with (bitten into) the uneven surface 12 of the push rod 8, and thus clearance adjustment for the braking device can be securely performed and a frictional force or connection force between the push rod 8 and the guide member 22 can be stabilized. Thus, the compact brake cylinder 1 can be obtained which has a clearance adjusting function of easily adjusting and controlling slide resistance.

In addition, in the embodiment, since the O-rings 28 are employed as elastic members in the embodiment, the each elastic member of the embodiment is further easily engaged with (bitten into) the recesses in comparison with an elastic member having, for example, a rectangular cross section, and the frictional force or connection force can be stabilized.

In addition, in the embodiment, a plurality of 0-rings 28 for being engaged with the uneven surface are provided. Therefore, the frictional force or connection force between the push rod 8 and the guide member 22 can be further stabilized.

Furthermore, since the backup ring 29 is provided between each of the plurality of O-rings 28, the each 0-ring 28 is prevented from entering the inside of the adjacent 0-ring or getting over the outside of the adjacent O-ring 28, and the push rod 8 and the guide member 22 can be securely connected to each other by the frictional force.

Furthermore, in the embodiment, the energizing spring 31 which pushes the O-rings 28 to one side in the axis direction is provided. Accordingly, even if a slight dimensional error arises regarding, for example, the width of the O-ring 28 or a engagement position of the locking ring 26, the 0-rings 28 are securely deformed by the energizing spring 31 so as to be crushed in the axis direction, and thus the frictional force or connection force between the push rod 8 and the guide member 22 can be stabilized.

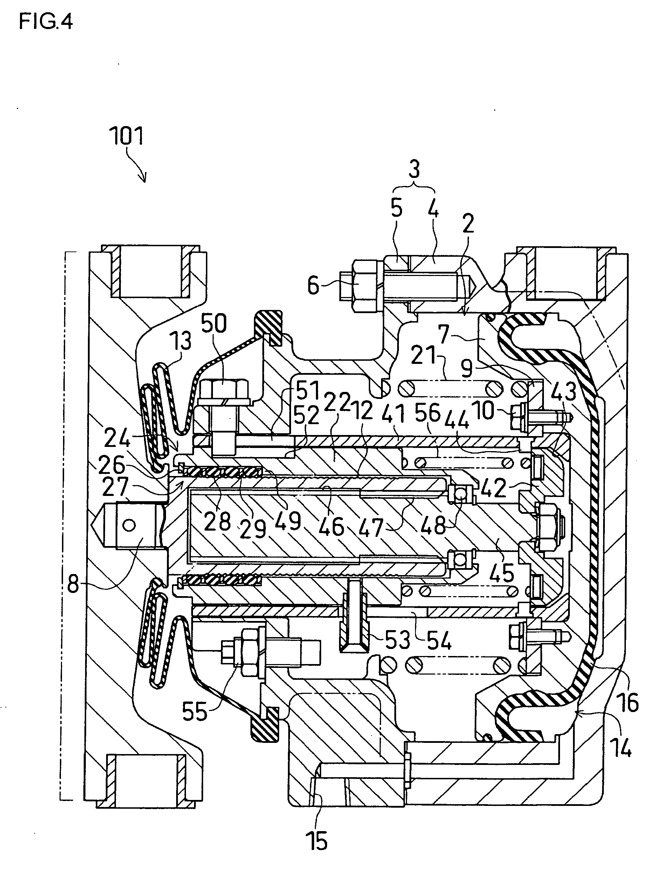

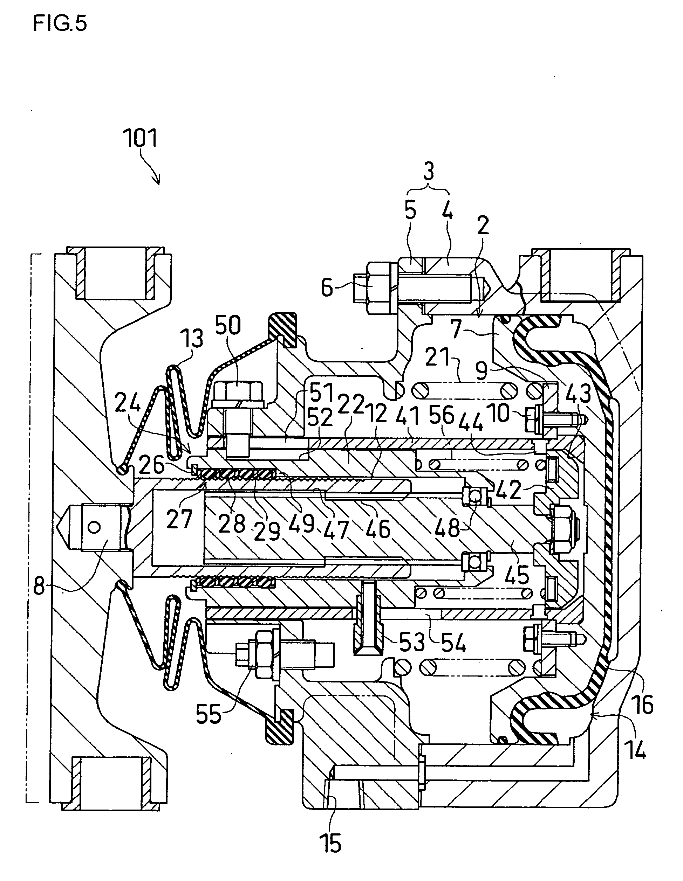

Next, a brake cylinder with a clearance adjustment device of a second embodiment will be described with reference to Fig. 4. In the second embodiment, the same symbols are, in principle, attached to members the same as, or similar to the members of the first embodiment, and description thereof will be omitted. Fig. 4 is a cross sectional view of the brake cylinder provided with the clearance adjustment device of the second embodiment in a brake non-operating state, and Fig. 5 is an entire cross sectional view of the brake cylinder being in the brake non-operating state after clearance adjustment.

In a brake cylinder 101, a base end of an outer cylinder 41 is fixed to the piston 7, which is arranged in the casing 4, via the flange plate 9 and the bolt 10. A head flange 42 is housed inside of the base end of the outer cylinder 41. A taper-shaped narrowing part 43 is formed in an inner circumferential surface at an axis end of the outer cylinder 41, and the taper-shaped narrowing part 43 allows an oblique outer edge of the head flange 42 to be pushed to the top end side (advancing side of the push rod 8) . In addition, a pushing pin 44 is provided on the outer cylinder 41 so as to project inward, and a tip of the pushing pin 44 is adapted to push the head flange 42 to the base end side (retreating side of the push rod 8). The pressurizing chamber 14 partition-formed by the piston 7 communicates with the feed/discharge port 15 formed on the cover 5 side.

A base end of a shaft rod 45 is attached to the head flange 42, and a male screw 46 is engraved on an outer circumferential surface of the shaft rod 45. In addition, the push rod 8 is cylindrically formed, a female screw 47 is engraved on an inner circumferential surface of a shaft hole of the push rod 8, and the male screw 46 of the shaft rod 45 is screwed in the female screw 47. Similar to the first embodiment, the uneven surface 12 is provided in the outer circumferential surface of the push rod 8, and the surface 12 has recesses and projections alternately arranged in the moving direction of the push rod 8.

Furthermore, the cylindrical guide member 22 is rotatably supported outside of the shaft rod 45 via a thrust bearing 48. The guide member 22 has a shaft hole with a stage, into which the push rod 8 is inserted, and the O-ring housing space 27 is provided in a part which is formed in a large diameter shape of the shaft hole. The O-ring housing space 27 is formed between a bottom part 49 (with a stage) of the large diametrical.hole and the locking ring 26 engaged with an opening of the large diametrical hole, and the inside (a side of the push rod 8 which faces the uneven surface 12) of the space 27 is opened.

In the O-ring housing space 27, a plurality (four) of O-rings 28 are arranged in the axis direction, and the backup ring 29 is arranged at each end of the each 0-ring 28 (between the adjacent O-rings 28). The energizing spring 31 (shown in Fig. 1) provided in the first embodiment is not provided in the second embodiment. Instead, positions of the large diametrical bottom 49 and the locking ring 26 are set in accordance with the width of the each O-ring 28 so that the O-rings 28 are elastically deformed so as to be slightly crushed in the axis direction between the bottom 49 and the locking ring 26. Thus, the O-rings 28 are expanded to the inner circumference side to be engaged with the uneven surface 12 of the outer circumferential surface of the push rod 8.

A rotation-proof bolt 50 is tightened into the cover 5 of the main body 3, and a tip thereof is inserted into a long hole 51 provided in the outer cylinder 41 and a long hole-shaped groove 52 provided on the guide member 22. Thus, the outer cylinder 41 and the guide member 22 are prevented from rotating.

In addition, a regulating body 53 is projected from the guide member 22 in a radius direction, and inserted into a long hole 54 provided in the outer cylinder 41. On the other hand, a stroke adjusting bolt 55 is tightened into the cover 5. When the guide member 22 moves to the advancing side by a predetermined stroke, the regulating body 53 comes into contact with a tip of the stroke adjusting bolt 55, and over-movement to the advancing side is regulated. The stroke adjusting bolt 55 is rotated so that a tip position thereof can be adjusted.

The returning spring 21 for energizing the piston 7 in the retreating direction is interposed between the cover 5 and the piston 7. In addition, an energizing spring 56 is interposed between the head flange 42 and the guide member 22.

Based on the above constitution, when pressurized air is fed to the feed/discharge port 15 from the non-operating state shown in Fig. 4, the piston 7 is pushed, against the returning spring 21, leftward in Fig. 4, and thus the outer cylinder 41 fixed to the piston 7 moves leftward. Then, the narrowing part 43 formed on the inner circumferential surface of the base end of the outer cylinder 41 pushes the outer edge of the head flange 42, and thus the head flange 42 also moves leftward in Fig. 4 and the push rod 8 connected to the shaft rod 45 also moves leftward. At this time, both the head flange 42 and the shaft rod 45 do not rotate, but these are simply pushed by the outer cylinder 41. The push rod 8 is thus pushed and advances leftward in Fig. 4 (together with the outer cylinder 41 and the guide member 22), and operates the vehicle braking device.

When the pressurized air is then discharged from the feed/discharge port 15, the piston 7 is pushed rightward in Fig. 4 by the returning spring 21, and thus the outer cylinder 41 is pulled rightward. Thus, the head flange 42 is pushed by the pushing pin 44, and the shaft rod 45 and the push rod 8 connected thereto are pulled rightward to retreat. Thus, the operating state is returned to the non-operating state shown in Fig. 4.

On the other hand, if the braking surface of the brake block of the vehicle braking device (not shown) wears down with long time use, the stroke of the push rod 8 necessary for operating the brake is increased, and a stroke of the guide member 22 connected to the push rod 8 via the O-rings 28 is also increased. When the stroke exceeds a stroke regulated by the stroke adjusting bolt 55, the regulating body 53 comes into contact with the tip of the stroke adjusting bolt 55, and thus a large returning force is applied to the guide member 22. Accordingly, after the regulating body 53 comes into contact with the tip of the stroke adjusting bolt 55, the 0-rings 28 are deformed and get over the projections of the uneven surface 12, and thus the push rod 8 is shifted (displaced), in the advancing direction, in relation to the guide member 22 in accordance with the remaining strokes of the push rod 8.

When the pressurized air is then discharged from the feed/discharge port 15 and the brake is released, the piston 7 is returned rightward in the figure by the returning spring 21, and the head flange 42 is pushed rightward by the pushing pin 44 of the outer cylinder 41 pulled by the piston. Then, the head flange 42 rotates together with the shaft rod 45, the shaft rod 45 is pulled out from the push rod 8, and the displacement of the push rod 8 in the advancing direction relative to the guide member 22 is offset by the screw movement. Consequently, when the piston 7 returns to the non-operating position shown in Fig. 4, the push rod 8 projects in the advancing direction by the displacement amount.

The clearance of the vehicle braking device is thus adjusted, and the vehicle braking device can be operated at a constant stroke of the push rod 8 from the next time. Fig. 5 shows a brake non-operating position in a state where the vehicle braking device wears down by a considerable amount and the clearance distance is adjusted by the clearance adjustment device 24. It is revealed that the push rod 8 moves to the top end side by a considerable distance from the non-operating position shown in Fig. 4.

In addition, as is evident from a comparison of Fig. 5 and Fig. 3, in comparison with the first embodiment, the position of the piston 7 in the second embodiment is not changed even if the vehicle braking device wears down. Accordingly, there is an advantage that the pressurized air amount necessary for operating the brake can be reduced even in the wear-down state of the vehicle braking device.

The preferred embodiments of the present invention have been described above. However, the above constitutions can be modified as follows, for example.

In the first embodiment, an energizing spring 31 may be omitted which energizes and compresses the 0-rings 28 to one side in the axis direction. In addition, in the second embodiment, an energizing spring for energizing the O-rings 28 can be provided. In addition, the number of 0-rings 28 can be increased or decreased in both the embodiments.

A backup ring 29 arranged between the adjacent O-rings 28 may be omitted. However, in terms of preventing the O-ring 28 from getting into or over the adjacent O-ring 28, it is preferable to interpose the backup ring 29 therebetween

## Claims

1. A clearance adjustment device (24) for a brake cylinder, **characterized in that** it comprises:
a push rod (8) and
a guide member (22) which is attached to the push rod (8) and movable together with the push rod (8),
wherein an uneven surface (12) is provided in an outer surface of the push rod (8), the uneven surface (12) having recesses and projections alternately arranged in a moving direction of the push rod (8),
a space (27) for opening the uneven surface (12) side is formed in the guide member (22) and an elastic member is arranged in the space (27),
the elastic member is deformed and engaged with the uneven surface (12) so that the guide member (22) and the push rod (8) are connected to each other, and
when a force exceeding a predetermined value is applied to the guide member (22), the elastic member is deformed and gets over projections of the uneven surface (12), and thus the push rod (8) is displaced in relation to the guide member (22).

2. The clearance adjustment device (24) for a brake cylinder according to claim 1, **characterized in that** the elastic member is an O-ring (28).

3. The clearance adjustment device (24) for a brake cylinder according to claim 2, **characterized in that** a plurality of the O-rings (28) are provided which are engaged with the uneven surface (12).

4. The clearance adjustment device (24) for a brake cylinder according to claim 3, **characterized in that** a backup ring (29) is interposed between each of the plurality of O-rings (28).

5. The clearance adjustment device (24) for a brake cylinder according to claim 2 or 3, **characterized in that** an energizing spring (31) for pushing the O-rings (28) to one side in an axis direction is provided in the space (27).

6. A brake cylinder (1, 101) **characterized in that** it comprises the clearance adjustment device (24) for a brake cylinder according to any one of claims 1 to 5.

## Patentansprüche

1. Spieleinstellvorrichtung (24) für einen Bremszylinder, **dadurch gekennzeichnet, daß** sie umfaßt:
eine Druckstange (8),
ein Führungsteil (22), welches an der Druckstange (8) befestigt und zusammen mit der Druckstange (8) beweglich ist,
wobei eine unebene Oberfläche (12) in einer äußeren Oberfläche der Druckstange (8) vorgesehen ist und die unebene Oberfläche (12) in einer Bewegungsrichtung der Druckstange (8) alternierend angeordnete Vertiefungen und Vorsprünge besitzt,
eine Aussparung (27) zur Aufnahme der Seite mit der unebenen Oberfläche (12), welche in dem Führungsteil (22) ausgebildet ist, wobei ein elastisches Element in der Aussparung (27) angeordnet ist,
das elastische Element verformt ist und von der unebenen Oberfläche (12) belegt wird, so daß das Führungsteil (22) und die Druckstange (8) miteinander verbunden sind, und
das elastische Mittel verformt wird und Vorsprünge der unebenen Oberfläche (12) überwindet und folglich die Druckstange (8) bezüglich des Führungsteils (22) verschoben wird, wenn eine einen vorbestimmten Wert überschreitende Kraft auf das Führungsteil ausgeübt wird.

2. Spieleinstellvorrichtung (24) für einen Bremszylinder nach Anspruch 1, **dadurch gekennzeichnet, daß** das elastische Element ein O-Ring (28) ist.

3. Spieleinstellvorrichtung (24) für einen Bremszylinder nach Anspruch 2, **dadurch gekennzeichnet, daß** eine Mehrzahl von O-Ringen (28) vorgesehen ist, welche von den unebenen Oberflächen belegt werden.

4. Spieleinstellvorrichtung (24) für einen Bremszylinder nach Anspruch 3, **dadurch gekennzeichnet, daß** ein Stützring (29) zwischen jedem der Mehrzahl von O-Ringen (28) angeordnet ist.

5. Spieleinstellvorrichtung (24) für einen Bremszylinder nach Anspruch 2 oder 3, **dadurch gekennzeichnet, daß** eine energiezuführende Feder (31) zum Drücken der O-Ringe zu einer Seite in einer Achsenrichtung in der Aussparung (27) angeordnet ist.

6. Bremszylinder (1, 101), **dadurch gekennzeichnet, daß** er die Spieleinstellvorrichtung (24) für einen Bremszylinder nach einem der Ansprüche 1 bis 5 umfaßt.

## Revendications

1. Dispositif de rattrapage de jeu (24) pour un cylindre de frein, **caractérisé en ce qu'**il comporte :
une tige de poussée (8),
un élément de guidage (22) qui est fixé sur la tige de poussée (8) et mobile avec la tige de poussée (8),
une surface irrégulière (12) étant prévue dans une surface extérieure de la tige de poussée (8), la surface irrégulière (12) ayant des renfoncements et des saillies disposés de manière alternée dans une direction de déplacement de la tige de poussée (8),
un espace (27) destiné à dégager le côté de surface irrégulière (12) étant formé dans l'élément de guidage (22) et un élément élastique étant disposé dans l'espace (27),
l'élément élastique étant déformé et engagé avec la surface irrégulière (12) de telle sorte que l'élément de guidage (22) et la tige de poussée (8) sont reliés l'un à l'autre, et
quand une force dépassant une valeur prédéterminée est appliquée sur l'élément de guidage (22), l'élément élastique est déformé et passe par dessus des saillies de la surface irrégulière (12), et la tige de poussée (8) est déplacée ainsi par rapport à l'élément de guidage (22).

2. Dispositif de rattrapage de jeu (24) pour un cylindre de frein selon la revendication 1, **caractérisé en ce que** l'élément élastique est un joint torique (28).

3. Dispositif de rattrapage de jeu (24) pour un cylindre de frein selon la revendication 2, **caractérisé en ce qu'**une pluralité de joints toriques (28) est prévue, les joints toriques étant engagés avec la surface irrégulière (12).

4. Dispositif de rattrapage de jeu (24) pour un cylindre de frein selon la revendication 3, **caractérisé en ce qu'**une bague d'appui (29) est interposée entre chaque joint torique de la multiplicité de joints toriques (28).

5. Dispositif de rattrapage de jeu (24) pour un cylindre de frein selon la revendication 2 ou 3, **caractérisé en ce qu'**un ressort (31) destiné à pousser les joints toriques (28) vers un côté dans une direction d'axe est prévu dans l'espace (27).

6. Cylindre de frein (1, 101) **caractérisé en ce qu'**il comporte le dispositif de rattrapage de jeu (24) pour un cylindre de frein selon l'une quelconque des revendications 1 à 5.
